# EUROPEAN PATENT APPLICATION

(11) **EP 0 818 931 A2**
(43) Date of publication of application: **14.01.1998**
(21) Application number: 97111465.7
(22) Date of filing: 07.07.1997
(51) Int. Cl.: H04N 7/50

(54) **Moving picture decoder with error handling**

(30) Priority: 08.07.1996 JP 177755/96
(71) Applicant: NEC CORPORATION, Tokyo (JP)
(72) Inventor: Sanpei, Tatsuya, Minato-ku, Tokyo (JP)
(74) Representative: Betten & Resch

(57) **Abstract**

In a moving picture decoder including a decoding section (1-4, 8) for sequentially decoding pictures in an input picture signal to produce decoded pictures as an output picture signal, memory (5) for storing last ones of the decoded pictures, error detector (9) for detecting an error in the input picture signal to produce an error detection signal, and error handling controller (11) responsive to the error detection signal for delivering, as a replacement picture, one of the last decoded pictures from the memory into the output picture signal, the error handling controller is responsive to the error detection signal to select, according to picture types of subsequent pictures in the input picture signal, decodable ones of the subsequent pictures, and to instruct to decoding section to decode the decodable pictures only.

## Description

### Background of the Invention:

This invention relates to a moving picture decoder and, in particular, to such a moving picture decoder having a function of replacement of an undecodable picture by another picture already decoded.

An input picture signal of the moving picture decoder is made by coding the original moving picture data by the predictive coding and the variable-length coding or the entropy coding based on a moving picture compressing system according to, for example, the international standards recommended by the Moving Picture Experts Group (MPEG).

According to MPEG-1, A sequence of motion pictures is separated into a plurality of GOPS (Group Of Pictures), each having a plurality of pictures or frames and being coded. The GOP consists of three picture types, that is, I picture (Intra Picture), P picture (Predictive Picture), and B picture (Bidirectional Picture). The I picture is a picture coded within a one frame or an intra frame coded picture. The P picture is a picture coded to predict a current picture from a past or forward picture, that is, an interframe-coded picture. The B picture is a picture coded to predict a current picture from a past or forward and a future or backward pictures. The B picture uses the future picture for prediction, the future picture must be coded prior to the current picture. Therefore, the order of original pictures is different from the coding and decoding order.

The I picture and the P picture must be held after decoded because they are often used as a reference picture for decoding the other P picture and B picture. Therefore, the known moving picture decoder is provided with memories for string the I picture and P picture decoded. However, the B picture is not used as a reference picture for decoding the other picture.

Generally speaking, the moving picture decoder has a variable-length decoder for decoding a input picture signal coded by the variable-length coding, and an error correction function for correcting error caused in the input picture signal.

However, there are often caused errors, for example, a transmission bit error which cannot be corrected by the error correction function. The variable-length decoder cannot decode the input picture signal after occurrence of the transmission bit error, so that the decoded picture is disturbed.

Thereafter, the variable-length decoder can recover the normal decoding operation by detection of a specific code or starting code usually included in the input picture signal.

However, even if the normal decoding operation is recovered by detection of the start code, it is not insured to obtain pictures which are correctly decoded thereafter. For example, when the input picture signal includes I or P picture followed by a subsequent picture of B picture type using the prior I picture or P picture as a reference picture and when the transmission error is caused in the I or P picture, B picture cannot correctly be decoded even if the normal decoding operation is recovered. This is because the I or P picture has not been decoded so that there is not provided the reference picture for correctly decoding the B picture.

When the subsequent picture is P picture type using as the reference picture the preceding I or P picture suffering the error, the picture of the P picture type is not correctly decoded, too. As a result, the following P or B picture using as the reference picture the undecoded P picture cannot be correctly decoded. Thus, Occurrence of an error badly affects or disturbs the subsequent pictures.

JP-A-6 98313 discloses a moving picture decoder where, upon occurrence of error in an input picture signal correction of which is impossible, decoding of a current picture in the input picture signal is stopped and is replaced by a past I or P picture already decoded which is stored in the memory.

However, the known moving picture decoder has first through three problems described below.

The first problem is that it is not insured that the past picture stored in the memory is correctly decoded, because the error badly affects the subsequent pictures as described above even after the normal decoding operation is recovered. That is, there is a case that the memory possibly stores a picture which is not correctly decoded due to the bad effect of the error. The following three reasons are possibly raised.

A first reason is that there are the following three causes by which correct decoding is failed:
Cause a: the decoding is failed by occurrence of an error during decoding;
Cause b: the decoding is failed by referring to the failed picture (a); and
Cause c: the decoding is failed by referring to the failed picture (b).

A second reason is that the picture coding and encoding order is different from the picture displaying order, as described above.

A third reason is that frequency and order of presence of I picture, P picture and B picture are not constant but at random in the input picture signal.

It is impossible from those reasons to determine an extent of subsequent pictures which cannot correctly decoded by bad effect of an error caused in the input picture signal.

The second problem is that the picture signal has a layer structure including a picture layer, higher layers than the picture layer and lower layers than the picture layer. The error caused in the higher layers must be dealt in a manner different from the error caused in the picture layer or the lower layers.

### Summary of the Invention:

It is an object of this invention to provide a moving picture decoder which can perform an optimal error treatment according to conditions of the error occurrence so as to effectively suppress disturbance of pictures due to the error occurrence.

It is another object to provide a moving picture decoder which can perform an optimal error treatment according to a picture type where the error is caused, so as to effectively suppress disturbance of pictures due to the error occurrence.

It is still another object to provide a moving picture decoder which can perform an optimal error treatment according to frequency and order of presence of picture types, so as to effectively suppress disturbance of pictures due to the error occurrence.

It is another object to provide a moving picture decoder which can perform an optimal error treatment according to a layer where the error is caused, so as to effectively suppress disturbance of pictures due to the error occurrence.

According to this invention, there is provided a moving picture decoder comprising decoding means for sequentially decoding pictures in an input picture signal to produce decoded pictures as an output picture signal, memory means for storing last ones of the decoded pictures, error detecting means for detecting an error in the input picture signal to produce an error detection signal, and error handling means responsive to the error detection signal for delivering, as a replacement picture, one of the last decoded pictures from the memory means into the output picture signal, the error handling means being responsive to the error detection signal and selects, as the replacement picture, a particular one of the decoded pictures which is correctly decoded.

According to this invention, there is also provided a moving picture decoder comprising decoding means for sequentially decoding pictures in an input picture signal to produce decoded pictures as an output picture signal, memory means for storing last ones of the decoded pictures, error detecting means for detecting an error in the input picture signal to produce an error detection signal, and error handling means responsive to the error detection signal for delivering, as a replacement picture, one of the last decoded pictures from the memory means into the output picture signal, the error handling means being responsive to the error detection signal to select decodable ones of pictures in the input picture signal to be correctly decoded, the error handling means instruct to the decoding means to decode the decodable pictures only.

### Brief Description of the Drawings:

Fig. 1 is a block diagram of a known moving picture decoder;
Fig. 2 shows an example of a series of frames for illustrating operation of the decoder of Fig. 1;
Fig. 3 is a view Illustrating a layer structure of a picture data code according to the MPEG Standards;
Fig. 4 is a block diagram of a moving picture decoder according to an embodiment of this invention;
Fig. 5 is a chart illustrating operational flow of the decoder of Fig. 4;
Fig. 6 is a chart illustrating a branch pass of the operational flow;
Fig. 7 is a view illustrating a series of frames obtained by decoding the series of frames of Fig. 2 by the decoder of Fig. 4; and
Fig. 8 is a block diagram of another decoder according to another embodiment of this invention.

### Description of Preferred Embodiments:

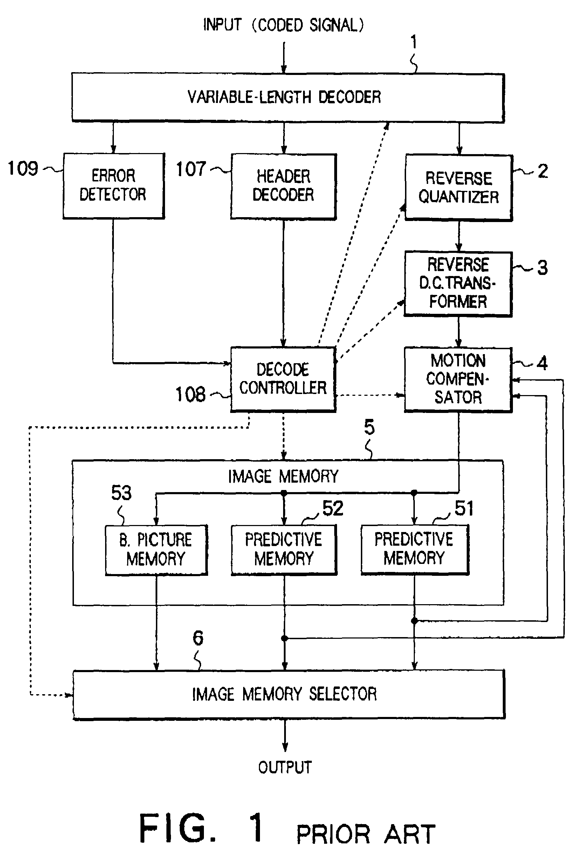

Prior to description of preferred embodiments of this invention, a known moving picture decoder will be described with reference to Figs. 1-3, so as to support the better understanding of this invention.

Referring to Fig. 1, the known moving picture decoder shown therein comprises a variable-length decoder 1, a reverse quantizer 2, a reverse discrete cosine (D.C.) transformer 4, a motion compensator 4, an image memory 5, an image memory selector 6, a header decoder 107, an decode controller 108, and an error detector 109. The image memory 5 comprises predictive memories 51 and 52, and B picture memory 53.

An input signal of coded picture data is applied to the variable-length decoder 1. The input signal comprises a header portion and a variable-length data portion. The header portion is delivered to and decoded at the header decoder 107 and is delivered as an decoded header signal which is delivered to the decode controller 108. While, the variable-length data portion is decoded at the variable-length decoder 1 and is delivered as a decode data signal which is delivered to the reverse quantizer 2. The decoded data signal is reversely quantized at the reverse quantizer 3 and then reversely discrete-cosine transformed at the reverse D.C. transformer 3 and is delivered as a transformed signal which is applied to the motion compensator 4.

When the input signal is a predictively coded signal, the transformed signal is subjected to an adding treatment of past decoded picture data stored in predictive memories 51 and 52 at the motion compensator 4 and is delivered as a decoded picture data signal.

When the decoded picture data signal is the I picture type or the P picture type, the decoded picture data signal is stored into the predictive memory 51 or 52 and is used as a reference data signal for decoding other predictively coded picture signals. Therefor, the decoded picture data signal in the predictive memory 51 or 52 is supplied from the predictive memory to the motion compensator 4 as the reference data signal for decoding other predictively coded picture signals.

The decoded picture data signal stored into the predictive memory 51 or 52 is also used for transformation of the picture data signal from a frame structure to a field structure and for enlargement or reduction of a picture size. The decoded data signal is also output from the predictive memory 51 or 52 at a desired timing for display. The predictive memories 51 and 52 are used alternately for storing the decoded signals of I picture and P picture types.

When the decoded picture data signal is the B picture type, it is stored into the B picture memory 53 for transformation of the picture data signal from a frame structure to a field structure, for enlargement or reduction of a picture size, and for adjustment of the output timing of the B picture data signal for display. The decoded data signal of the B picture type is never used as the reference for decoding the other predictively coded data signals.

The predictive memories 51 and 52 and the B picture memory 53 are connected to and selected by the image memory selector 6 so as to output the decoded data signal as an output picture data signal from the selected one of the memories 51-53.

The decode controller 108 controls the decoding operation by those sections 1-6.

The error detector 109 is connected to the variable-length decoder 1 and monitors the variable length data portion of the input signal applied to the variable-length decoder 1 to detect an error caused in the variable length data portion, such as a transmission bit error. When the error cannot be corrected and disables to decode a particular picture data in the variable length data portion, the error detector 109 delivers an error detection signal to the decode controller 108.

Responsive to the error detection signal, the decode controller 108 controls the variable-length decoder 1 to decode neither the particular picture data nor other specific picture data referring to the particular picture data. While, the decode controller 108 controls the image memory selector 6 to deliver, as an output, a past decoded picture data from the image memory 5 in place of a decoded data signal or the particular picture data.

However, the known moving picture decoder has first to third problems as described in the preamble of the description.

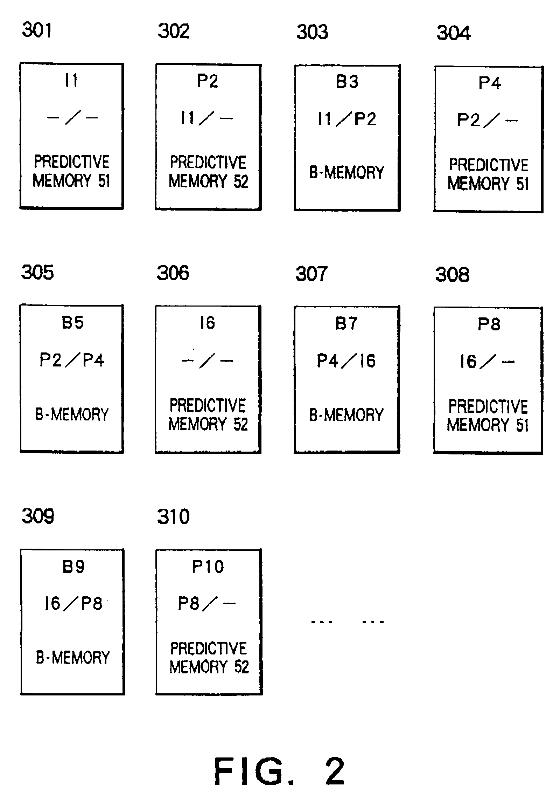

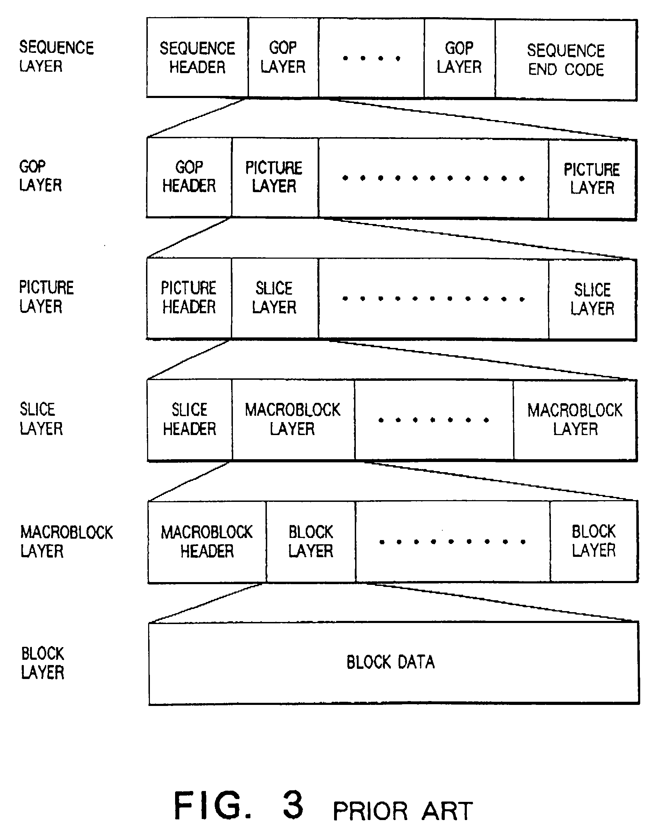

Now, description will be made as regards those problems in connection with a particular example with respect to Figs. 2 and 3.

Referring to Fig. 2, there is diagramatically shown a series of pictures 301-310 which are numbered in the order of coding of original pictures. In a rectangular block representing each of the pictures, there are described a picture type with a picture number (I1, P2, ...), indication of the forward/backward reference pictures (I1/-, I1/p2,...), and designation of memory to be stored (B memory, predictive memory 1,...), on the first, second and third lines, respectively.

Now, it is provided that the error such as transmission bit error is caused in the data of the second picture 302 (P2) which is shown by a rectangular contour of a thick line.

At first, description is directed the first reason of the first problem.

In the example, it will be noted that it is impossible to decode the picture 302 (P2) since the error is caused in the picture data (this is cause a for the decoding failure as described in the preamble).

Picture 303 (B3) cannot be decoded because it uses picture 302 (P2) having the error as a backward reference (reason b for the decoding failure).

Picture 304 (P4) cannot be decoded because it uses, as a forward reference, picture 302 (P2) unable to be decoded (reason b for the decoding failure).

Picture 305 (B5) cannot be decoded because it uses, as a forward reference, picture 302 (P2) unable to be decoded and uses, as a backward reference, picture 304 (P4) unable to be decoded (reasons b and c for the decoding failure).

Picture 307 (B7) cannot be decoded because it uses, as a forward reference, picture 304 (P4) unable to be decoded (reason c for the decoding failure).

Pictures 306 (I6), 308 (P8), 309 (B9), and 310 (P10) can be correctly decoded because they do not refer pictures enable to be decoded.

As described above, the cause a for decoding failure further leads causes b and c for decoding failure and badly affects to decode a plurality of pictures.

Next, description is directed to the second reason of the first problem.

Referring to Fig. 2, B pictures 305 (B5), 307 (B7), and 309 (P9) use, as backward reference pictures, pictures 304 (P4), 306 (I6), and 308 (P8), respectively. Therefore, pictures 304 (P4), 306 (I6), and 308 (P8) are coded prior to pictures 305 (B5), 307 (B7), and 309 (P9), respectively, although pictures 305 (B5), 307 (B7), and 309 (P9) go before pictures, pictures 304 (P4), 306 (I6), and 308 (P8), respectively, in the display order, that is, the pictures are displayed in the order of 305 (B5), 304 (P4), 307 (B7), 306 (I6), 309 (B9), and 308 (P8). In the display order, pictures 305 (B5), 304 (P4), and 307 (B7) unable to be correctly decoded precede to pictures 306 (I6), 309 (B9), and 308 (P8) which can be correctly decoded. However, in the decoding order, pictures unable to be correctly decoded and pictures able to be correctly decoded are irregularly arranged because of presence of B type pictures using the backward reference picture. Therefore, it is difficult to define what picture is badly effected for decoding by presence of an error in one picture data in the variable length data.

The third reason of the first problem will be described.

In the example of Fig. 2, I picture type, P picture type and B picture type are arranged in a regular order that P and B are alternatively present after I. According to the regularity, it will be possible to previously determine a picture at which encoding can be restarted for the following pictures. However, a practical picture sequence does not have such regularity but has pictures of those types present in a different and irregular order. Therefore, it is impossible to previously determine the picture at which the encoding is restarted.

Now, the second problem will be described with respect to Fig. 3.

Referring to Fig. 3, there is shown a layer structure of a moving picture sequence according to the MPEG standards. That is, the layer structure comprises a sequence layer, a GOP layer, a picture layer, a slice layer, a macroblock layer, and a block layer in the downward layer level.

The sequence layer comprises a sequence header, a sequence end code, and a plurality of GOP layers between the sequence header and the sequence end code. The GOP layer comprises a GOP header and a plurality of picture layers following the GOP header. The picture layer, the slice layer, and the macroblock layer comprise have picture header, slice header, and macroblock header, following slice layers, macroblock layers and block layers, respectively, as shown in the figure. The block layer comprises a plurality or blocks.

The description in connection with Fig. 2 is directed to the error caused in the picture layer. However, when an error occurs in a layer higher than the picture layer, for example, in the sequence header in the sequence layer, the error badly affect to the entirety of the sequence layer. Therefore, when the error occurs in the layer higher than the picture layer, it must be treated in a manner different from the error occurring the picture layer or other lower layer.

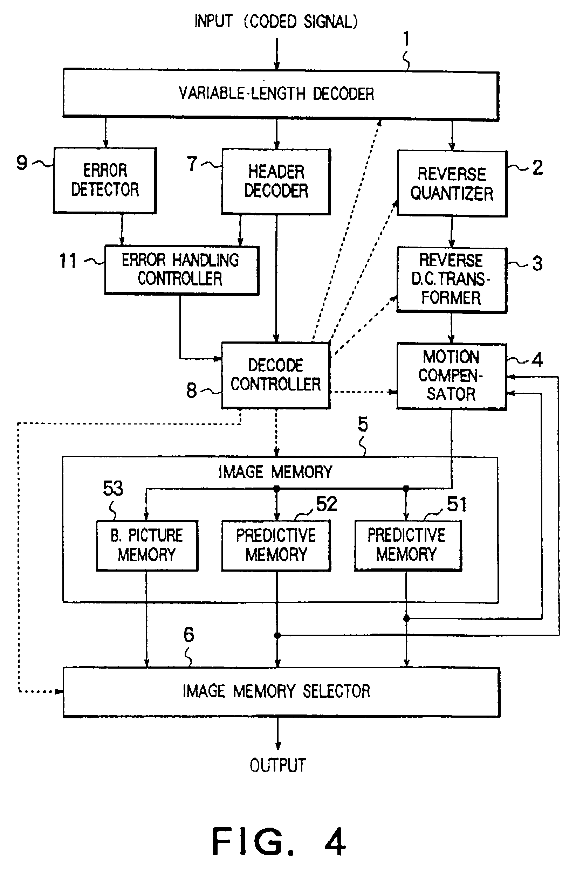

Now, referring to Fig. 4, a moving picture decoder shown therein according to one embodiment of this invention comprises elemental blocks, that is, the variable length decoder 1, the reverse quantizer 2, the reverse discrete cosine (D.C.) transformer 3, motion compensator 4, image memory 5 including predictive memories 51 and 52 and B picture memory 53, the image memory selector 6, the header decoder 7, decode controller 8, and the error detector 9, similar to the known decoder of Fig. 1. The decoder of Fig. 4 is different from the known decoder of Fig. 1 in provision of an error handling controller 11 and control function of the decode controller 8, and will be described in connection with the differences from the known decoder of Fig. 1. However, the similar structure and function will not be described for the purpose of simplification of the description.

The error handling controller 11 is connected to the header decoder 7, the error detector 9 and the decode controller 8.

The header decoder 7 decodes the header of each of layers to deliver to the error handling controller 11 information of the picture type of the current picture which is to be decoded at the variable length decoder 1. When receiving the information of the picture type, the error handling controller 11 keeps the picture type and produces a decoding instruction for indicating decode of the current picture.

Upon receipt of the error detection signal from the error detector 9, the error handling controller 11 produces a decode stop instruction for indicating stop of decoding of the picture which is currently decoded. Further, the error handling controller 11 defines the condition upon receipt of the error detection signal to produce an abandonment instruction for indicating abandonment of coded data of the input signal up to next sequence layer or next picture layer. When receiving the information of the picture type of the next picture after the error detection signal, the error handling controller defines referring to the prior data such as the prior picture types and error whether the next picture can correctly be decoded or not. The error handling controller 11 produces the decode instruction when the next picture is defined to be correctly decodable while the abandonment signal when the next picture is defined not to be correctly decodable.

The decoding, stop, and abandonment instruction are delivered to the decode controller 8, which controls the variable length decoder 1, reverse quantizer 2, the reverse D.C. transformer 3, the motion compensator 4, the image memory 5, and the image memory selector 6 according to the instruction.

Now, referring to Figs. 2 and 3 in addition to Fig. 1, description will be made as regards operation of the error handling controller 11 and the decode controller 8.

During performing normal decoding of by circular steps of S1 and S2, the error handling controller 11 produces the stop instruction at step S3 when an error is detected by error detector 9. Thus, the decoding is stopped. Then, the error handling controller 11 defines or detects, at step S4, whether the error layer, which is the layer hit by the error, is the higher layer than the picture layer. When the error layer is defined as the higher layer at step S5, the error handling controller 11 produces the abandonment signal, at step S6 and the decode controller 8 then indicates the variable length decoder 1 to scrap data in the input signal until the next sequence header arrives. Thus, it is prevented the picture layers in the error sequence layer from being erroneously decoded.

Then, the error handling controller 11 completes the error handling or treatment and restarts the decoding at step S7. When the next sequence header is detected at the header decoder 7, the operation returns to step S1.

When defining the error layer not the higher layer than the picture layer at step S5, the error handling controller 11 produces, at step S11, a reading instruction for indicating to read out the last picture in the predictive memories 51 and 52. The decode controller 8 controls the image memory selector 5 to read out the last picture as the output.

Since the predictive memories 51 and 52 store the I and P picture types, the I or P picture type is output in place of the B picture type even when the error picture layer is the B picture type.

Thereafter, the error handling controller 11 produces, at step S12, the abandonment signal for indicating abandonment of data until the next picture header arrives, and defines or detects the picture type of the error picture layer at step S13. When the error picture layer is defined the B picture type at step S14, the error handling controller 11 completes the error handling or treatment and restarts the decoding at step S7. When the next picture header is detected at the header decoder 7, the operation returns to step S1. This is because the B picture type is not used as the reference picture for decoding the coded date of other pictures.

When the error picture type is defined I or P picture type at step S14, the error handling controller 11 produces the reading instruction to the decode controller 8 at Step S15. Thus, the last picture in the predictive memory 51 or 52 is read out by the image memory selector 6 and delivered as the output.

Thereafter, the error handling controller 11 defines the picture type of the next picture layer at step S16. When the next picture layer is defined not the I picture type but the P or B picture type at step S17, the error handling controller 11 produces, at step S18, the abandonment signal for indicating abandonment of data until the further next picture header arrives. This is because the next picture layer cannot correctly be decoded because the prior error picture layer is not decoded, noting that the forward picture must be used as the reference picture for decoding the P or B picture type. Then, the step returns to step 15 to read out the last picture in the predictive memory 51 or 52 in place of the picture layer abandoned at step S18.

When the next picture layer is defined the I picture type at step S17, the error handling controller 11 delivers the decode instruction to the decode controller 8 to decode the next picture layer of the I picture type at step S21.

Then, the error handling controller 11 further defines the picture type of the next picture layer at step S22. When the picture type is the I or P picture type at step S23, operation is shifted to step S7. Thus, the normal decoding operation is performed.

When the next picture layer is B picture type at step S23, the error handling controller 11 delivers the reading instruction and the abandonment instruction, at steps S24 and S25, to the decode controller 8. The decode controller 8 controls the image memory selector 6 to read out the last picture in the predictive memory 51 or 52 and also control the variable length decoder 1 to scrap the data until the next picture head arrives. Thus, the read out picture is delivered as the output in place of the next picture of the B picture type which is abandoned at step S25. The read out picture is the I picture type decoded at step S21.

The operation is shifted from step 25 to step S22.

Now, operation of the moving picture decoder of Figs. 4-6 will be in connection with the a practical example where the series of pictures shown in Fig. 2 incomes as the input signal.

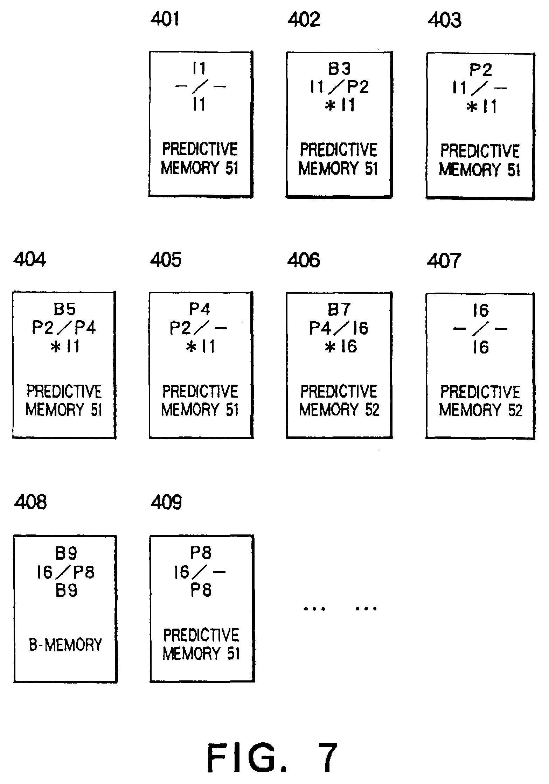

Referring to Fig. 7, there are shown a series of pictures 401-409 represented by rectangles to be displayed which are resultant from processing the series of pictures 301-310 as the input signal of Fig. 2 by the moving picture decoder of Fig. 4 and are arranged in the displaying order. In each of the rectangles, the picture type with picture number (I1, B3,...) and the forward/backward reference picture (-/-, I1/P2,...) are indicated on first and second lines, respectively. The picture type with picture number and the forward/backward reference picture are corresponding t those in Fig. 2. As described above, the picture number is based on the coding order, and the pictures are arranged in the order of the picture number in Fig. 2. However, the pictures are arranged in the display order in Fig. 7, therefore, different from the picture number.

In each of rectangles, the picture type with picture number actually displayed and memory from which the picture is read out are also indicated on third and fourth lines. The mark * means to indicate that the actual display picture is the past decoded picture used in place of the picture unable to be correctly decoded. The picture 403 is an error picture hit by the transmission bit error ad is therefore shown by a rectangle of a thick line.

The input picture 301 (I1) is decoded at step S1 and is stored in the predictive memory 51. Then, during decoding the input picture 302 (P2), an error is detected at step S2, so that the decode of the picture 302 (P2) is stopped at step S3. Since the error occurs in the picture 302, that is, in the picture layer, the operation is shifted through steps S4 and S5 to step S11. At step S11, the last decoded picture I1 is read out from the predictive memory 51 to deliver it as the output picture 401. Therefore, the display picture is not disturbed by the presence of the error. At step 12, the data of the input picture 302 are abandoned.

At steps S13 and S14, the picture type of the error picture 302 (P2) is detected P picture type. Then, the last decoded picture I1 is again read out at step S15 and is delivered as the output picture 402. Then, the picture type of the next input picture 303 (B3) is detected B picture type at steps S16 and S17, and the data of the input picture 303 (B3) are abandoned at step S18 because the picture 303 (B3) indicates, as the reference picture for decoding, the prior picture 302 (P2) which is not decoded. Thereafter, the last decoded picture I1 is read out at step S15 and is delivered as the output picture 403.

Thereafter, the picture type of the next input picture 304 (P4) is detected P picture type at steps S16 and S17, and the data of the input picture 304 (P4) is abandoned at step S18. Then, the last decoded picture I1 is again read out from the predictive memory 51 and is delivered as the output picture 404.

Thereafter, the picture type of the next input picture 305 (B5) is detected B picture type at steps S16 and S17, and the data of the input picture 305 (B5) is abandoned at step S18. Then, the last decoded picture I1 is again read out from the predictive memory 51 and is delivered as the output picture 405.

Thereafter, the picture type of the next input picture 306 (I6) is detected I picture type at steps S16 and S17, and the input picture 306 (I6) is decoded at step S21. The decoded picture I6 is stored in the predictive memory 52.

Thereafter, the picture type of the next input picture 307 (B7) is detected B picture type at steps S22 and S23. Then, the last decoded picture I6 is read out from the predictive memory 52 at step S24 and is delivered as the output picture 406, and the data of the input picture 307 (B7) are abandoned at step S25. This is because the input picture 307 (B7) cannot be decoded by the reason that it must use, as the reference picture for decoding, the picture P4 which is not decoded.

Thereafter, the picture type of the next input picture 308 (P8) is detected P picture type at steps S22 and S23. Then, the operation step is shifted to step S7 and the error handling operation is completed and the normal decoding is restarted at step S1.

The input picture 308 (P8) is decoded and is stored in the predictive memory 51. While, the last decoded picture I6 is read out from the predictive memory 52 and is delivered as the output picture 407. The next input picture 309 (B9) is decoded using the decoded picture P8 and I6 stored in the predictive memories 51 and 52 and is stored in the B memory 53. The decoded picture B9 is read out from the B memory at a predetermined timing and delivered as the output picture 408. Then, the input picture 310 (P10) is decoded using, as the reference picture, the decoded picture P8 stored in the predictive memory 51 and the decoded picture P10 is stored in the predictive memory 52. While, the decoded picture P8 is read out from the predictive memory 51 and is delivered as the output picture 409.

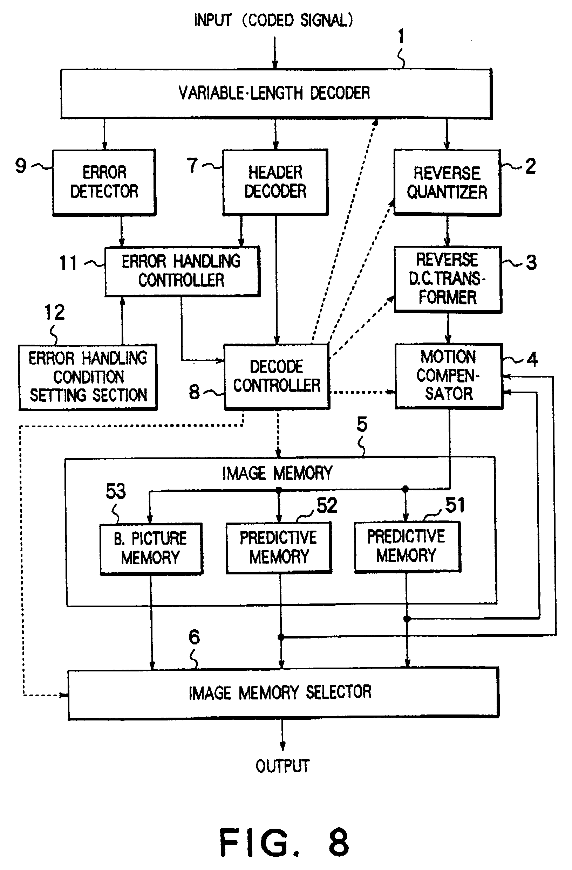

Referring to Fig.8, there is shown a moving picture decoder according to another embodiment of this invention, which is similar to that of Fig. 4, except for provision of an error handling condition setting section 12. The similar parts are represented by the same reference characters as in Fig. 4.

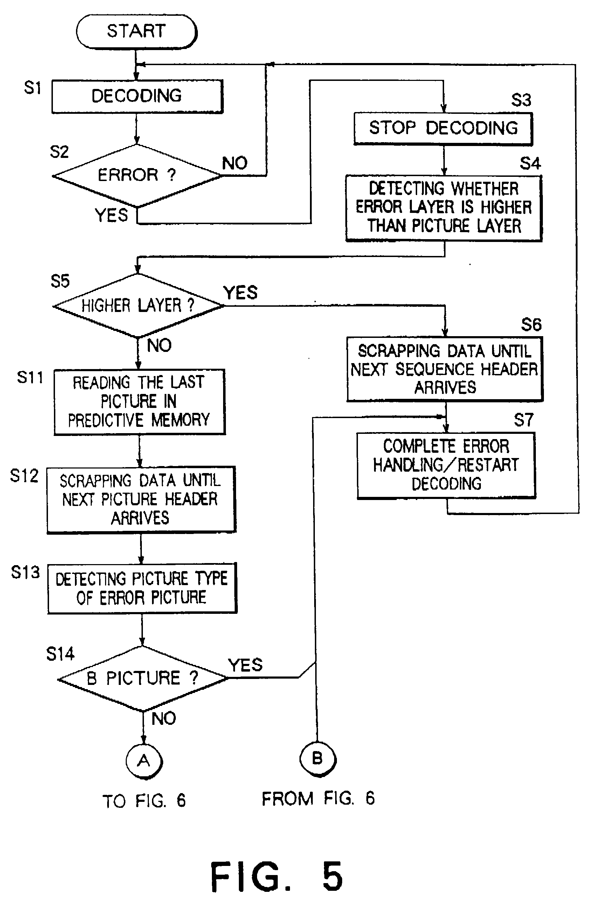

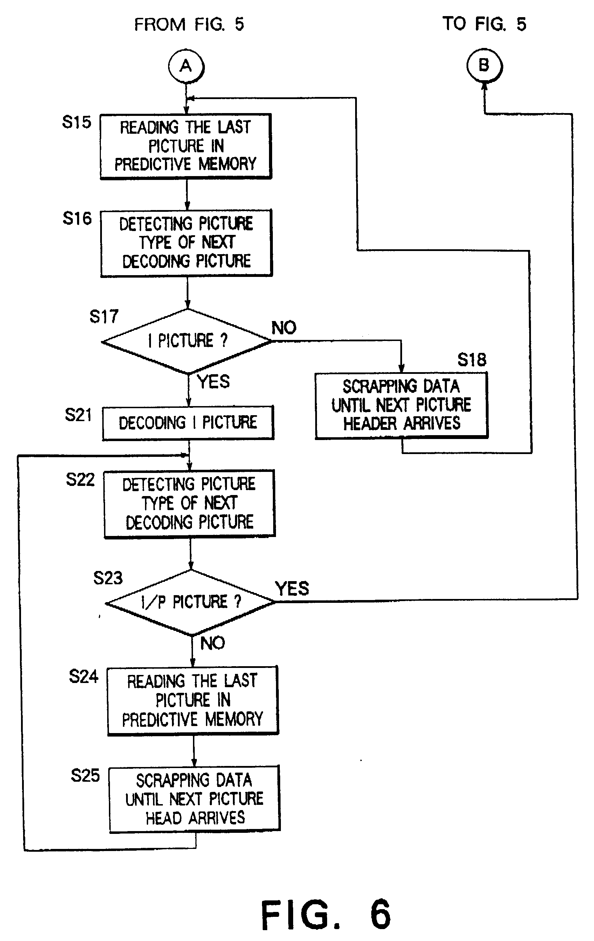

The error handling condition setting section 12 is connected to the error handling controller 11 and is for setting conditions for recovering the normal decoding operation from the error handling operation. The error handling controller 11 operates according to the conditions set by the error handling condition setting section 12. The condition for recovering the normal decoding operation from the error handling operation are corresponding to steps S5, S14, S17, and S23 in the flow charts of Figs. 5 and 6.

For example, at step S5, the condition is set to always select "YES". Then, the data of the current sequence are all abandoned and the normal decoding is restarted from the fresh sequence of the input picture signal.

This invention has been described In connection with the picture signal coded by the MPEG standards. However, in connection with the other coding standard, the present invention is also practised by setting the conditions according to the other coding standards into the error handling controller 11 and the error handling condition setting section 12.

## Claims

1. A moving picture decoder including decoding means (1-4, 8) for sequentially decoding pictures in an input picture signal to produce decoded pictures as an output picture signal, memory means (5) for storing last ones of the decoded pictures, error detecting means (9) for detecting an error in the input picture signal to produce an error detection signal, and error handling means (11) responsive to the error detection signal for delivering (6), as a replacement picture, one of the last decoded pictures from the memory means (5) into the output picture signal, characterized in that said error handling means (11) is responsive to said error detection signal and selects (6), as said replacement picture, a particular one of said decoded pictures which is correctly decoded.

2. A moving picture decoder including decoding means (1-4, 8) for sequentially decoding pictures in an input picture signal to produce decoded pictures as an output picture signal, memory means (5) for storing last ones of the decoded pictures, error detecting means (9) for detecting an error in the input picture signal to produce an error detection signal, and error handling means (11) responsive to the error detection signal for delivering (6), as a replacement picture, one of the last decoded pictures from the memory means (5) into the output picture signal, characterized in that said error handling means (11) is responsive to said error detection signal to select decodable ones of pictures in the input picture signal to be correctly decoded, said error handling means (11) instruct to decoding means (1-4, 8) to decode said decodable pictures only.

3. A moving picture decoder as claimed in claim 2, each input pictures in said input picture signal having a picture header including a picture type and indication of reference picture, further comprising header decoder (7) for decoding said picture header to produce header information of said picture type and said reference picture, said error handling means (11) being responsive to said header information to select said decodable pictures.

4. A moving picture decoder as claimed in claim 3, wherein said error handling means (11) instructs said decoding means (1-4, 8) to abandon picture data of other input pictures than said decodable pictures.

5. A moving picture decoder as claimed in claim 4, wherein upon defines the condition that the subsequent input pictures are free from affect by said error detected, said error handling means (11) instructing said decoding means (1-4, 8) to recover the normal decoding operation for sequentially decoding the input pictures of said input picture signal.

6. A moving picture decoder as claimed in claim 5, said input picture signal having a plurality of sequences of moving pictures, each of said sequences having a sequence header, wherein in case where said error is detected to be caused in said sequence header of a current sequence (S5), the picture data of said current sequence are abandoned until the sequence header of the next sequence arrives (S6), and said normal decoding operation is recovered for the next sequence (S7).

7. A moving picture decoder as claimed in claim 5, said input picture signal having different picture types, an intra picture (I picture)type, a predictive picture (P picture) type coded to predict using the prior picture, and bidirectional picture (B picture) coded to predict using the prior and following pictures, wherein after receiving said error detection signal caused in a current input picture, said error handling means (11) defines said header information of the next input picture to instruct said decoding means (1-4, 8) to recover said normal decoding operation from said next input picture when said next input picture is the B picture type (S14).

8. A moving picture decoder as claimed in claim 7, wherein when said next picture is the I picture type (S17), said error handling means (11) instructs said decoding means (1-4, 8) to decode said next input picture (S21) and store the decoded picture into said memory means.

9. A moving picture decoder as claimed in claim 8, wherein said error handling means (11) further defines the picture type of the subsequent input picture (S22) after said next input picture to instruct said decoding means to recover said normal decoding operation from said subsequent input picture when said subsequent input picture is the I picture type or P picture type (S23).

10. A moving picture decoder as claimed in claim 2, further comprising condition setting means (12) for setting conditions by which said error handling means performs its control operation.
